# FASCICULE DE BREVET EUROPEEN

(11) **EP 3 856 880 B1**
(45) Date de publication et mention de la délivrance du brevet: **26.03.2025**
(21) Numéro de dépôt: 19778519.9
(22) Date de dépôt: 27.09.2019
(51) Int. Cl.: A23B 7/02, C11B 1/04, A23L 3/54, C11B 1/06, C11B 1/08, C11B 3/00, C11B 7/00, C11C 1/02, A23L 19/00

(54) **PROCÉDÉ DE PRÉPARATION D'AVOCATS DÉSHYDRATÉS PAR SÉCHAGE MICRO-ONDES**
VERFAHREN ZUR HERSTELLUNG VON DEHYDRIERTEN AVOCADOS DURCH MIKROWELLENTROCKNUNG
PROCESS FOR PREPARING DEHYDRATED AVOCADOS BY MICRO-WAVE DRYING

(30) Priorité: 27.09.2018 FR 1858914
(43) Date de publication de la demande: 04.08.2021
(73) Titulaire: Laboratoires Expanscience, 92048 Paris La Défense Cedex (FR)
(72) Inventeur: LE CROUEROUR, Gaelle, 28300 LEVES (FR); TAUPIN, Delphine, 27530 CROTH (FR); RANCE, Iann, 78660 PRUNAY EN YVELINES (FR)
(74) Mandataire: Regimbeau
(86) Numéro de dépôt international: PCT/EP2019/076300
(87) Numéro de publication internationale: WO 2020/065061

(56) Documents cités:
- WO-A1-2013/104793
- WO-A1-2013/104795
- WO-A2-2009/066259
- AU-A- 4 214 596
- US-A- 4 560 568
- US-A1- 2004 018 258
- US-A1- 2011 091 616
- GUTFINGER T ET AL: "Studies of unsaponifiables in several vegetable oils", LIPIDS, SPRINGER, DE, vol. 9, no. 9, 1 January 1974 (1974-01-01), pages 658 - 663, XP009158777, ISSN: 0024-4201, DOI: 10.1007/BF02532171

## Description

La présente invention se situe dans le domaine de la préparation d'avocats déshydratés et d'huile d'avocat obtenue à partir d'avocats déshydratés.

La présente invention porte plus spécifiquement sur un procédé de préparation d'avocats déshydratés et sur un procédé de préparation d'une huile d'avocat riche en insaponifiable, ces deux procédés comprenant une étape de séchage de l'avocat par micro-ondes.

L'avocat est devenu aujourd'hui un aliment de consommation courante. L'avocat est riche en huile, puisque les lipides représentent entre 10 et 20% du fruit frais. La grande richesse en corps gras est en effet une des caractéristiques de ce fruit. L'huile est utilisée depuis de nombreuses années pour ses applications en cosmétique et pharmacie. En outre, grâce à ses propriétés nutritionnelles, son intérêt comme huile alimentaire ou complément alimentaire est important, et la production mondiale ne cesse de progresser.

Les huiles brutes ou vierges d'avocat sont généralement extraites par un procédé qualifié de pression à froid, qui consiste en un malaxage des fruits frais, suivis d'une séparation des trois phases, solide, huileuse et aqueuse dans un décanteur centrifuge. Une ultime phase de polissage par clarification centrifuge permet de produire une huile parfaitement limpide. D'autres procédés, tels que la pression à froid avec addition d'adjuvants solides ou encore l'extraction supercritique, permettent de produire des huiles d'avocat vierges.

Des huiles d'avocat peuvent également être obtenues à partir d'avocats séchés. Un traitement thermique des avocats permet de réduire l'humidité résiduelle dans les fruits à une teneur inférieure à 10%, rendant possible l'extraction de l'huile par un solvant organique ou par pression mécanique.

Cependant, de tels procédés d'extraction incluant un chauffage de l'avocat, généralement dans une étuve ou par air chaud, peuvent entrainer des réactions secondaires de dégradation bien connues de l'homme de métier, telles que les réactions de Maillard, ou des modifications chimiques importantes, notamment en présence de substrats thermosensibles tels que les lipides (ex. acides gras insaturés) et la fraction insaponifiable (ex. vitamine E). Ainsi, les processus thermiques vont favoriser la thermo-oxydation des substrats, les réactions radicalaires responsables de l'apparition de peroxydes, mais aussi de réactions de condensation intra ou intermoléculaires à l'origine de la formation de produits lourds de type réaction de Maillard.

Ainsi, la faible stabilité de certains constituants de l'avocat et les risques liés à leur toxicité potentielle nécessitent la maîtrise du devenir de ces constituants lors des différentes étapes du procédé pour produire une huile de qualité cosmétique, pharmaceutique ou alimentaire. Par conséquent, il existait un besoin de mettre au point des procédés visant à obtenir des huiles d'avocat brutes ou raffinées ne présentant pas les inconvénients de l'art antérieur et permettant de commercialiser des huiles issues d'avocats séchés en toute sécurité. WO 2009/066259 divulgue un procédé de préparation d'avocats déshydratés comprenant les étapes suivantes : sélectionner des avocats ; couper la pointe ; enlever la peau ; trancher avec le noyau inclus ; déshydrater à un taux d'humidité de 0 à 2 % en proportion du poids, en appliquant un vide à une pression absolue comprise entre 0 et 200 mm de Hg et une énergie micro-ondes comprise entre 0,5 watts par gramme et 10 watts par gramme ; et retirer les sections du noyau des tranches.

US 2011/091616 divulgue un procédé de préparation d'avocats déshydratés comprenant les étapes suivantes : a) fournir une pluralité de fruits entiers d'avocat ; b) laver les fruits entiers d'avocat ; c) couper les fruits entiers d'avocat en au moins deux portions ; d) retirer les noyaux des fruits ; e) effectuer une première déshydratation des portions des fruits d'avocat dans au moins un four à micro-ondes alimenté en air, jusqu'à ce que le taux d'humidité maximal de la pulpe soit compris entre 8 et 12 % p/p ; f) effectuer une deuxième déshydratation des portions de fruits obtenues lors de la première déshydratation jusqu'à ce que le taux d'humidité maximal soit compris entre 2 et 7 % p/p ; et e) broyer les portions de fruits restantes après la seconde déshydratation jusqu'à une granulométrie comprise entre 0,5 et 2,5 mm.

La demande de brevet EP 1 966 358 divulgue un procédé d'obtention d'une huile d'avocat raffinée permettant de se débarrasser substantiellement des impuretés spécifiques de l'avocat, tels que les acétogénines encore appelés « persin », et des produits de dégradation responsables de l'amertume. Le procédé divulgué dans EP 1 966 358 comprend une étape de distillation moléculaire judicieusement intercalée entre le séchage des fruits et le raffinage de l'huile permettant l'élimination des composés non désirés et instables.

La première étape du procédé divulgué dans EP 1 966 358 est une étape de déshydratation contrôlée des avocats à une température comprise de préférence entre 70 et 90°C. Cette étape est généralement effectuée par séchage en étuve ou séchage à l'air chaud et peut durer de 8 à 36 h jusqu'à l'obtention d'un taux résiduel d'humidité dans le fruit inférieur ou égal à 5%.

Les demandes internationales WO 2013/098293, WO 2013/104795 et WO 2013104793 divulguent également un procédé d'obtention d'une huile brute d'avocat par extraction par pression mécanique. Les procédés décrits dans ces demandes internationales comprennent tous trois une étape de séchage à haute température comprise entre 60°C et 150°C, jusqu'à l'obtention d'une humidité résiduelle inférieure ou égale à 5%. Dans les exemples de ces demandes internationales, l'étape de séchage est réalisée en étuve pendant 24h, voire 72h.

US 2004/018258 divulgue un procédé de préparation d'une fraction insaponifiable d'avocat comprenant les étapes successives suivantes : (1) une étape de déshydratation contrôlée d'avocats frais ou ayant subi des transformations préliminaires, réalisée à une température comprise entre -50°C et 75°C ; (2) une étape d'extraction de l'huile du fruit déshydraté ; (3) une étape, alternativement : a - Traitement thermique de l'huile extraite à une température avantageusement comprise entre 80 et 150° C, puis concentration de l'huile en sa fraction insaponifiable, ou bien b - Concentration de l'huile en sa fraction insaponifiable, puis traitement thermique à une température avantageusement comprise entre 80 et 150° C; et (4) une étape de saponification et d'extraction de l'insaponifiable.

Dans les demandes précitées, il est crucial de bien contrôler cette étape de séchage afin d'assurer que l'avocat déshydraté n'a pas été dénaturé physiquement et chimiquement, et notamment qu'il contient toujours les composés d'intérêts pour ses utilisations nutraceutique, cosmétique ou pharmaceutique, notamment les insaponifiables. Cependant, les méthodes de séchage utilisées jusqu'à ce jour, notamment en étuve ou sous air chaud, sont longues, consomment beaucoup d'énergie, et ne permettent pas d'adapter la capacité des séchoirs à des quantités variables d'avocats (le procédé n'est approprié/rentable qu'à partir de dizaines de tonnes d'avocats minimum).

Il existe donc un besoin d'amélioration de l'étape de déshydratation de l'avocat dans le but d'obtenir un avocat déshydraté et/ou une huile d'avocat à partir d'avocats déshydratés, similaires à ceux obtenus avec une étape de déshydratation par séchage en étuve ou à l'air chaud, mais consommant moins d'énergie, permettant un gain de temps, et donnant accès à une grande flexibilité quant à la quantité d'avocats à sécher (de quelques dizaines de kg à quelques dizaines de tonnes).

### RESUME DE L'INVENTION

La présente invention répond aux besoins suscités.

Dans le cadre de la présente invention, les inventeurs ont découvert qu'il était possible d'obtenir des avocats déshydratés, notamment présentant une humidité résiduelle inférieure ou égale à 5%, par un procédé comprenant une étape de séchage par micro-ondes.

Les inventeurs ont notamment découvert des conditions spécifiques de séchage par micro-ondes permettant d'obtenir des avocats entiers déshydratés présentant une humidité résiduelle inférieure ou égale à 5%, malgré le fait que les différentes parties de l'avocat (peau, noyau et pulpe), prises individuellement, réagissent différemment au séchage par micro-ondes.

Les inventeurs ont notamment découvert que pour obtenir des avocats déshydratés présentant une humidité résiduelle inférieure ou égale à 5% à l'aide d'une étape de séchage par micro-ondes, il est notamment nécessaire d'éliminer l'eau évaporée sous l'action des micro-ondes grâce à un flux d'air chaud de température inférieure ou égale à 80°C à un débit supérieur ou égal à 150 m³/h. De même, il convient également de sélectionner des avocats frais entiers de dureté moyenne ou forte et de les trancher en lamelles.

Les inventeurs ont plus particulièrement découvert que la mise en œuvre d'une étape de séchage par micro-ondes, dans des conditions particulières, ne détériorait pas les caractéristiques de l'avocat déshydraté ainsi obtenu, ni de l'huile obtenue à partir desdits avocats déshydratés.

Ainsi, il a été découvert qu'une étape de séchage par micro-ondes permet d'obtenir un avocat déshydraté et/ou une huile d'avocat à partir d'avocats déshydratés, similaires à ceux obtenus avec une étape de déshydratation par séchage en étuve ou à l'air chaud, mais consommant moins d'énergie et permettant un gain de temps substantiel ainsi qu'une plus grande flexibilité d'utilisation vis-à-vis de la quantité d'avocats à sécher.

La présente invention permet notamment d'obtenir une huile présentant une teneur et une qualité en insaponifiable similaire voire meilleure que celle obtenue dans l'art antérieur à l'aide d'étape de séchage en étuve ou à l'air chaud par exemple.

De même, la présente invention permet d'obtenir des tourteaux présentant une teneur en sucres et en particuliers en sucres spécifiques d'avocat en C7, similaire voire meilleure que celle obtenue dans l'art antérieur à l'aide d'étape de séchage en étuve ou à l'air chaud par exemple.

La présente invention a pour premier objet, un procédé de préparation d'avocats déshydratés comprenant les étapes suivantes :
a) sélectionner les avocats frais ayant une force de résistance à la pénétration dans la chair supérieure à 1 kg/cm², ladite force étant mesurée à l'aide d'un pénétromètre ;
b) trancher en lamelles les avocats sélectionnés ; et
c) sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°C à un débit supérieur ou égal à 150 m³/h.

La présente invention a pour second objet, un procédé de préparation d'une huile d'avocat riche en insaponifiable comprenant les étapes suivantes :
a) Sélectionner les avocats frais ayant une force de résistance à la pénétration dans la chair supérieure à 1 kg/cm², ladite force étant mesurée à l'aide d'un pénétromètre ;
b) Trancher en lamelles les avocats entiers sélectionnés ;
c) Sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°C à un débit supérieur ou égal à 150 m³/h;
d) Eventuellement, concasser les avocats déshydratés obtenus à l'étape c) ;
e) Extraction de l'huile à partir des avocats déshydratés obtenus à l'étape c) ou d), de préférence par pressage mécanique ; et
f) Récupération de l'huile obtenue, de préférence par filtration.

La présente invention a pour troisième objet, un procédé de préparation d'un tourteau d'avocat riche en sucres comprenant les étapes suivantes :
a) Sélectionner les avocats frais ayant une force de résistance à la pénétration dans la chair supérieure à 1 kg/cm², ladite force étant mesurée à l'aide d'un pénétromètre ;
b) Trancher en lamelles les avocats entiers sélectionnés ;
c) Sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°C à un débit supérieur ou égal à 150 m³/h;
d) Eventuellement, concasser les avocats déshydratés obtenus à l'étape c) ;
e) Extraction de l'huile à partir des avocats déshydratés obtenus à l'étape c) ou d), de préférence par pressage mécanique ; et
f') Récupération du tourteau obtenu.

### DESCRIPTION DETAILLEE DE L'INVENTION

### DEFINITION

Par le terme « avocat mou » ou « avocat de faible dureté », on entend au sens de l'invention, un avocat ayant une force de résistance à la pénétration dans la chair inférieure ou égale à 1 kg/cm². Par le terme « avocat de dureté moyenne », on entend au sens de l'invention, un avocat ayant une force de résistance à la pénétration dans la chair supérieure à 1 et inférieure ou égale à 3 kg/cm². Par le terme « avocat dur » ou « avocat de dureté forte », on entend au sens de l'invention, un avocat ayant une force de résistance à la pénétration dans la chair supérieure à 3 kg/cm². Typiquement selon la présente invention, la force de pénétration est mesurée à l'aide d'un pénétromètre du type PCE-PTR 200 ou FT 327, qui mesure la force en kilogramme nécessaire pour faire pénétrer un embout calibré dans le fruit. Avantageusement, le fruit est pelé avant de faire la mesure afin de s'affranchir de la résistance de la peau (tégument) et de la variabilité relative aux différentes variétés d'avocat testées. La tige, appelée pointal ou embout, utilisée pour cette mesure a un diamètre nominal de l'ordre de 6 à 11,3 mm.

Par le terme « avocat entier », on entend, au sens de l'invention, des avocats contenant la peau, la pulpe et le noyau distribués dans leur intégrité.

Par le terme d'avocats « sans noyau », on entend, au sens de la présente invention, des avocats entiers dans lesquels le noyau a été retiré, et ne contenant ainsi plus que la peau et la pulpe.

Par le terme d'avocats « sans peau », on entend, au sens de la présente invention, des avocats entiers dans lesquels la peau a été retirée, et ne contenant ainsi plus que la pulpe et le noyau.

Par le terme « insaponifiable », on entend au sens de l'invention, l'ensemble des constituants d'un corps gras qui après saponification en milieu fortement alcalin, sont très peu solubles ou insolubles dans l'eau, et solubles dans des solvants organiques, tels que l'éther éthylique, les hydrocarbures aromatiques, les solvants chlorés, le MeTHF, etc. L'insaponifiable est donc composé de tous les constituants non hydrolysables du corps gras, ainsi que ceux résultant majoritairement de la saponification d'esters non glycéridiques d'acides gras (esters de stérols, cires, esters de tocophérols...). Quatre grands groupes ou familles de substances sont généralement présents dans la plupart des insaponifiables d'huiles végétales. Le groupe le plus important en masse est représenté par celui qui rassemble les stérols incluant les alcools triterpéniques pentacycliques et les 4-méthylstérols. Le second groupe est constitué par les tocophérols pouvant intégrer des tocotriènols. Les deux autres groupes sont les alcools aliphatiques et les hydrocarbures aliphatiques saturés et insaturés. La composition de l'insaponifiable d'avocat se différentie de la composition classiquement trouvée dans les huiles végétales car elle intègre majoritairement des constituants spécifiques de l'avocat. La fraction majoritaire de l'insaponifiable d'avocat est représentée par le groupe des acétogénines, qui sont des composés précurseurs des furanes aliphatiques. La deuxième famille de molécules regroupe les alcools gras polyhydroxylés. Le troisième groupe est constitué par les stérols incluant les alcools triterpéniques pentacycliques et les 4-méthylstérols. Les autres groupes sont minoritaires.

Par le terme « riche en insaponifiable », on entend au sens de l'invention, une huile qui comprend typiquement au moins 3% en masse d'insaponifiable, avantageusement au moins 5% en masse d'insaponifiable, par rapport à la masse totale de l'huile. Par exemple, l'huile comprend entre 3 et 15% en masse d'insaponifiable, avantageusement entre 5 et 15%, en particulier 5 à 12%, plus particulièrement 8 à 12%, en masse d'insaponifiable, par rapport à la masse totale de l'huile.

Par le terme « sucre », on entend au sens de l'invention, l'ensemble des substances glucidiques présentes dans l'avocat et notamment l'ensemble des sucres hydrosolubles de l'avocat. Les substances glucidiques présentes dans l'avocat peuvent être des oses (tels que les sucres en C7), des oligosaccharides, des polysaccharides et/ou des sucres-alcools (tel que le perséitol). L'avocat est notamment particulièrement riche en sucres comprenant 7 atomes de carbone, communément appelés « sucres en C7 », notamment le D-mannoheptulose et/ou le perséitol.

Par le terme « tourteau d'avocat », on entend au sens de l'invention, le résidu solide obtenu après extraction de l'huile d'avocat. Le tourteau est typiquement obtenu après filtration et séparation de l'huile d'avocat extraite à partir d'avocat déshydratés.

Par le terme « tourteau d'avocat riche en sucres », on entend au sens de l'invention, un tourteau d'avocat comprenant typiquement au moins 5% en masse de sucres, avantageusement au moins 10% en masse de sucres, plus avantageusement de 5 à 15% en masse de sucres, notamment de 10 à 15% en masse de sucres, par rapport à la masse totale du tourteau. Les sucres présents dans le tourteau d'avocat selon l'invention comprennent avantageusement au moins 80% de sucres en C7, parmi lesquels le Mannoheptulose et le Perséitol, et de sucres non spécifiques de l'avocat tels que le Fructose, le Saccharose et le Glucose. Par exemple, le Mannoheptulose représentera au moins 35% des sucres et le Perséitol représentera au moins 35% des sucres, par rapport à la masse totale en sucres contenus dans le tourteau.

Par le terme « protéine », on entend au sens de l'invention, l'ensemble des protéines de l'avocat. Une protéine est une macromolécule constituée d'une ou plusieurs chaînes d'au moins cinquante acides aminés appelées polypeptides, auxquelles sont souvent ajoutés des groupements divers, et possédant une structure tridimensionnelle. Les protéines possèdent typiquement un poids moléculaire supérieur à 10000 Da.

Par le terme « humidité résiduelle », on entend, au sens de la présente invention, la quantité d'eau liquide contenue dans un échantillon de matière après que celle-ci ait été soumise à un procédé visant à la sécher. Elle est évaluée par un rapport pondéral ou volumétrique. L'humidité résiduelle peut être déterminée par des méthodes bien connues de l'homme du métier, notamment à l'aide d'une méthode thermogravimétrique par séchage IR. D'autres méthodes peuvent également être mises en œuvre, telles que la méthode de perte au séchage en étuve ou la méthode de titrage Karl Fischer.

### Objet 1 - Procédé de préparation d'avocats déshydratés

La présente invention a pour premier objet, un procédé de préparation d'avocats déshydratés comprenant les étapes suivantes :
a) sélectionner les avocats frais ayant une force de résistance à la pénétration dans la chair supérieure à 1 kg/cm², ladite force étant mesurée à l'aide d'un pénétromètre ;
b) trancher en lamelles les avocats sélectionnés ; et
c) sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°C à un débit supérieur ou égal à 150 m³/h.

La présente invention a donc pour premier objet, un procédé tel que décrit ci-dessus pour la préparation d'avocats déshydratés présentant une humidité résiduelle inférieure ou égale à 5%.

La plupart des variétés d'avocat peuvent être utilisées dans le cadre de la présente invention pour produire les avocats déshydratés. Par exemple, le procédé selon l'invention peut être appliqué à la liste, non exhaustive, de variétés d'avocat suivantes : Bacon, Collin, Duke, Edranol, Ettinger, Fuerte, Hass, Lula, Maluma, Mexicana, Nabal, Nava, Pinkerton, Queen, Ryan, Sultan, et Superfuerte.

Les avocats utilisés comme produit de départ sont des avocats entiers.

Dans le cadre de la présente invention, les avocats frais doivent être sélectionnés en fonction de leur maturité. En effet, de par la constitution en trois parties distinctes du fruit, la peau, la pulpe et le noyau, le comportement de l'avocat lors du tranchage va être très variable en fonction de son degré de maturité et de fermeté de la pulpe et de la peau. Dans la première phase suivant sa récolte, le fruit possède une homogénéité de structure et de dureté entre les trois parties, favorable à son tranchage ; on parle alors d'avocat dur. Dès lors que la pulpe commence à se ramollir, la dureté compartimentaire du fruit (pulpe, peau, noyau) devient très hétérogène et limite tout tranchage industriel du fait de la présence du noyau qui reste très dur et de la perte de consistance de la peau et de la pulpe. Par ailleurs, le séchage des fruits mous entiers sans préparation ne donne pas de résultats satisfaisants, car il aboutit à un séchage hétérogène en eau libre résiduelle favorable à l'apparition de réactions parasites et hétérogènes, facteurs de dégradation de l'huile et de son insaponifiable.

Ainsi, dans le cadre de la présente invention, les avocats frais sélectionnés lors de l'étape a) ne sont pas des avocats mous. Typiquement, les avocats mous ont un degré de ramollissement équivalent à celui d'une consommation immédiate de l'avocat, et excluent leur tranchage en lamelle. Les avocats sélectionnés lors de l'étape a) ont donc une force de résistance à la pénétration dans la chair supérieure à 1 kg/cm², de préférence supérieure ou égale à 2 kg/cm², ladite force étant mesurée à l'aide d'un pénétromètre.

Avantageusement, les avocats sélectionnés lors de l'étape a) sont des avocats durs, c'est-à-dire des avocats ayant une force de résistance à la pénétration dans la chair supérieure à 3 kg/cm², ladite force étant mesurée à l'aide d'un pénétromètre.

Lors de l'étape b) du procédé selon l'invention, le tranchage en lamelle des avocats est avantageusement opéré à l'aide d'une trancheuse à disque.

Avantageusement, lors de l'étape b), les avocats entiers sont tranchés en lamelle de 1 à 5 mm d'épaisseur, plus avantageusement de 1 à 3 mm d'épaisseur, en particulier de 2 mm d'épaisseur.

Il a été découvert que le tranchage des avocats en lamelles a une influence sur l'homogénéité et la qualité finale des avocats déshydratés obtenus. Par exemple, un découpage des avocats en cubes ne permet pas le séchage à cœur des fruits, ce qui entraine l'obtention d'avocats déshydratés présentant plus de 5% d'humidité résiduelle, et une altération du contenu en insaponifiable de l'huile obtenue.

Dans le cadre de la présente invention, le séchage des lamelles d'avocats frais est réalisé par chauffage micro-ondes associé à un flux d'air chaud.

La particularité de l'échauffement par micro-ondes est de chauffer de l'intérieur vers l'extérieur. Quelques molécules d'eau commencent à se vaporiser, et provoquent des pressions partielles à l'intérieur des cellules qui ont pour effet d'éjecter les molécules d'eau non encore vaporisées. Il se crée un effet d'essorage qui permet d'extraire un maximum d'eau avec un minimum d'énergie. Cependant, pour une efficacité maximale et notamment pour atteindre une humidité résiduelle inférieure ou égale à 5%, il a été découvert que l'eau ainsi extraite doit être éliminée de l'enceinte micro-ondes, de préférence en continu.

Ainsi, lors de l'étape c) du procédé selon l'invention, l'eau évaporée sous l'action des micro-ondes est éliminée grâce à un flux d'air chaud de température inférieure ou égale à 80°C à un débit supérieur ou égal à 150 m³/h, avantageusement par un flux d'air chaud de température inférieure ou égale à 80°C, plus avantageusement à température inférieure à 80 °C, en particulier à température comprise entre 40°C et 80°C, plus particulièrement à température comprise entre 40°C et 60°C.

Avantageusement, le débit de ce flux d'air chaud est compris entre 200 et 500 m³/h.

Dans la cadre de la présente invention, il convient d'adapter la puissance micro-onde afin de permettre un séchage rapide des avocats tout en préservant les composés d'intérêts tels que les sucres et les insaponifiables et en évitant une prise de feu des avocats. Avantageusement, lors de l'étape c), la puissance micro-onde est comprise entre 1000 et 5000 W, de préférence entre 2000 et 5000 W, en particulier entre 2500 et 5000 W, en particulier pour un équipement fonctionnant à une fréquence micro-onde de 2450 Mhz.

En fonction de la puissance micro-onde choisie, mais également de la quantité d'avocats à sécher, il convient d'adapter la durée de séchage, c'est-à-dire de l'étape c). Plus la puissance du séchage est forte moins la durée est longue. De même, plus la quantité d'avocats à sécher est importante, plus la durée de séchage est longue. Ainsi, il convient d'adapter la durée de séchage en fonction du rendement de séchage obtenu à une puissance micro-onde donnée.

Avantageusement, pour une puissance micro-onde comprise entre 1000 et 5000 W, la durée du séchage est déterminée en considérant que le rendement du séchage est entre 10 g et 2000 g, avantageusement entre 350 g et 2000 g, plus avantageusement entre 700 g et 2000 g, en particulier entre 1250 g et 2000 g, de lamelle d'avocat obtenues à l'étape b) séchées en 1 minute. En particulier, pour une puissance micro-onde comprise entre 1000 et 3000 W, la durée du séchage est déterminée en considérant que le rendement du séchage est entre 10 g et 700 g, avantageusement entre 350 g et 700 g, plus avantageusement entre 500 g et 700 g, en particulier entre 600 g et 700 g, de lamelle d'avocat obtenues à l'étape b) séchées en 1 minute, et pour une puissance micro-onde comprise entre plus de 3000 et 5000 W, la durée du séchage est déterminé en considérant que le rendement du séchage est entre 15 g et 2000 g, avantageusement entre 700 g et 2000 g, plus avantageusement entre 1000 g et 2000 g, en particulier entre 1500 g et 2000 g, de lamelle d'avocat obtenues à l'étape b) séchées en 1 minute.

Les conditions sélectionnées pour la réalisation du séchage de l'étape c) sont établies dans le but d'obtenir des avocats déshydratés présentant une humidité résiduelle inférieure ou égale à 5%, avantageusement inférieure à 5%, plus avantageusement inférieure à 4%, tout en préservant la qualité des avocats déshydratés et notamment en préservant les composés d'intérêts tels que les sucres et les insaponifiable. L'étape c) du procédé selon l'invention est ainsi réalisée dans des conditions permettant d'optimiser les besoins en énergie et limiter les réactions indésirables.

Ledit avocat déshydraté a une humidité résiduelle inférieure ou égale à 5%, avantageusement inférieure à 5%, plus avantageusement inférieure à 4%, et présente avantageusement une couleur verte à marron clair. En outre, ledit avocat déshydraté présente avantageusement un aspect « craquant », contrairement aux fruits séchés par lyophilisation qui présentent généralement un aspect « moelleux ».

Une humidité résiduelle inférieure ou égale à 5% joue un rôle important dans la consistance des avocats séchés, leur conférant une texture solide cassante favorable pour résister aux contraintes physiques développées pendant la pression mécanique. Au-delà de 5% d'humidité, l'avocat séché présente une consistance molle qui conduit, lors de la pression, à la formation d'une purée sans consistance suffisante pour être pressée efficacement.

Dans un mode de réalisation avantageux, la présente invention a pour objet un procédé de préparation d'avocats déshydratés présentant une humidité résiduelle inférieure ou égale à 5%, comprenant les étapes suivantes :
a) sélectionner les avocats frais ayant une force de résistance à la pénétration dans la chair supérieure à 1 kg/cm², ladite force étant mesurée à l'aide d'un pénétromètre ;
b) trancher en lamelles les avocats entiers sélectionnés, avantageusement en lamelle de 1 à 5 mm d'épaisseur, plus avantageusement de 1 à 3 mm d'épaisseur, en particulier de 2 mm d'épaisseur ; et
c) sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température entre 40°C et 80°C, avec un débit d'air chaud supérieur ou égal à 150 m³/h, plus avantageusement entre 180 et 500 m³/h,
en outre, lors de l'étape c), la puissance micro-onde est comprise entre 1000 et 5000 W, de préférence entre 2000 et 5000 W, en particulier entre 2500 et 5000 W.

### Objet 2 - Procédé de préparation d'une huile d'avocat riche en insaponifiable

La présente invention a pour second objet, un procédé de préparation d'une huile d'avocat riche en insaponifiable comprenant les étapes suivantes :
a) Sélectionner les avocats frais ayant une force de résistance à la pénétration dans la chair supérieure à 1 kg/cm², ladite force étant mesurée à l'aide d'un pénétromètre ;
b) Trancher en lamelles les avocats entiers sélectionnés ;
c) Sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°C à un débit supérieur ou égal à 150 m³/h ;
d) Eventuellement, concasser les avocats déshydratés obtenus à l'étape c) ;
e) Extraction de l'huile à partir des avocats déshydratés obtenus à l'étape c) ou d), de préférence par pressage mécanique ; et
f) Récupération de l'huile obtenue, de préférence par filtration.

Dans le cadre de ce second objet de l'invention, les étapes a) à c) sont identiques à celles citées dans le cadre du procédé de préparation d'avocats déshydratés (premier objet). Ainsi, la partie concernant l'objet 1 de l'invention est intégralement reprise ici.

L'étape optionnelle d) de concassage des avocats déshydratés obtenue à l'étape c) peut être réalisée dans le but de faciliter l'acheminement et la conservation des avocats déshydratés vers le système de pressage. Cette étape peut être réalisée par des méthodes connues de l'homme du métier telles que par l'usage de concasseur (à mâchoires, à percussion, à cône), de broyeur (à marteaux, à lame, à cylindre), d'hacheur, ou de moulin.

L'étape d'extraction (e) de l'huile est mise en œuvre par une pression mécanique de la matière sèche, après mise en œuvre de l'étape de séchage c) ou de concassage d).

Avantageusement, l'étape d'extraction (e) est réalisée à une température comprise entre 80 et 100°C. Cette température est obtenue et maintenue constante par tous les moyens à disposition tels que, préchauffage du corps du presse, préchauffage des avocats séchés puis additionnés d'eau en alimentation de la presse, chauffage du corps de presse, etc.

En particulier, le maintien de la température de travail de la presse à une valeur supérieure à 80°C, plus particulièrement à 100°C, permet de garantir un bon niveau d'extraction de l'huile et d'améliorer notablement le rendement d'extraction des constituants de l'insaponifiable, notamment les acétogénines, les alcools aliphatiques, les stérols et/ou les hydrocarbures aliphatiques saturés.

L'étape d'extraction (e) selon l'invention est généralement complétée par une filtration qui élimine les particules solides et garantit la limpidité de l'huile produite.

Le procédé selon la présente invention permet de produire ainsi une huile d'avocat de qualité avec une composition particulière, notamment possédant un indice d'acide faible et un potentiel élevé en insaponifiable et une composition de cet insaponifiable particulière.

Ladite huile d'avocat est une huile riche en insaponifiable. Avantageusement, l'huile contient au moins 3%, plus avantageusement au moins 5%, en masse d'insaponifiable, par rapport à la masse totale de l'huile.

Avantageusement, l'insaponifiable de l'huile contient les familles moléculaires suivantes : des hydrocarbures saturés et insaturés, des alcools terpéniques et aliphatiques, des stérols, des tocophérols, des caroténoïdes et des xanthophylles.

De manière particulièrement avantageuse, l'insaponifiable de l'huile comprend de 0 à 5% en masse d'hydrocarbures aliphatiques saturés. En particulier, lesdits hydrocarbures aliphatiques saturés sont typiquement des hydrocarbures à chaîne linéaire non ramifiée présentant un nombre impair de carbones. Avantageusement, les hydrocarbures aliphatiques saturés sont des alcanes en C₂₇, C₂₉ ou C₃₁.

De manière particulièrement avantageuse, l'huile contient au moins 0,5 % en masse de stérols, avantageusement au moins 0,8% en masse de stérols, par rapport à la masse totale de l'huile. En particulier, lesdits stérols sont avantageusement choisis dans le groupe constitué par le β-Sitostérol, le Campestérol, le Stigmastérol, le Δ5-Avenastérol, le Δ7-Stigmastérol, le Citrostadiénol, et leurs mélanges.

Avantageusement, l'insaponifiable contenu dans l'huile contient également des acétogénines aliphatiques et/ou leurs dérivés.

Dans le cadre de l'invention, les acétogénines aliphatiques et leurs dérivés sont notamment des alcools gras polyhydroxylés et leurs dérivés acétylés, et/ou des 1,2-dihydroxy-4-oxo-aliphatiques alcools et leurs dérivés acétylés de type «persins», et/ou des furanes aliphatiques, ainsi que leurs mélanges.

Les alcools gras polyhydroxylés sont encore appelés Fraction I. Il s'agit notamment de triols du type 1,2,4-trihydroxy à longues chaînes acétyléniques et oléfiniques. Les dérivés acétylés des alcools gras polyhydroxylés sont typiquement en position 1, 2 ou 4.

Les 1,2-dihydroxy-4-oxo-aliphatiques alcools sont encore appelés persins, et sont des précurseurs de la Fraction H, c'est-à-dire des furanes aliphatiques. Il s'agit notamment des diols cétones du type 1-2-dihydroxy-4-oxo à longues chaînes acétyléniques et oléfiniques. Les dérivés acétylés de ces composés sont typiquement en position 1.

Les persins se trouvent typiquement dans les idioblastes, cellules oléagineuses dans le cas de l'avocat.

Par exemple, on peut citer particulièrement les persins de structure moléculaire suivante :

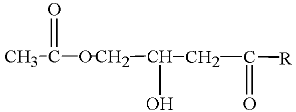

Les furanes aliphatiques sont encore appelés lipides furaniques, ou plus communément avocadofuranes ou Fraction H. Il s'agit notamment de dérivés des persins comportant un groupement furane, qui résultent en particulier de la transformation chimique par déshydratation et cyclisation intramoléculaire des persins extraites de l'avocat. A titre d'exemple, on peut citer les 2-alkyl furanes.

Avantageusement, l'insaponifiable de l'huile est riche en acétogénines aliphatiques et/ou leurs dérivés. De manière particulièrement avantageuse, l'huile contient typiquement au moins 2% en masse d'acétogénines aliphatiques et/ou de leurs dérivés, typiquement au moins 3% en masse d'acétogénines aliphatiques et/ou de leurs dérivés, par rapport à la masse totale de l'huile. Par exemple, l'huile contient entre 2 et 10%, en particulier entre 3 et 10%, plus particulièrement entre 5 et 8% en masse d'acétogénines aliphatiques et/ou de leurs dérivés, par rapport à la masse totale de l'huile.

La présente invention concerne également un procédé de préparation d'un insaponifiable d'avocat comprenant les étapes a) à f) citées ci-dessus ainsi que les étapes suivantes :
g) alternativement :
   i. Traitement thermique de l'huile extraite à une température avantageusement comprise entre 80 et 150°C, puis concentration de l'huile en sa fraction insaponifiable, ou bien
   ii. Concentration de l'huile en sa fraction insaponifiable, puis traitement thermique à une température avantageusement comprise entre 80 et 150°C,
h) suivie d'une étape de saponification et d'extraction de l'insaponifiable,
i) et éventuellement au moins une purification et/ou un fractionnement.

L'étape de concentration de l'huile en sa fraction insaponifiable pour préparer un concentrat, mise en œuvre à l'étape (g)i. ou (g)ii., est avantageusement opérée par cristallisation à froid ou par distillation moléculaire. Avantageusement, le concentrat en insaponifiable d'huile d'avocat est préparé par distillation moléculaire, typiquement à une température comprise entre 180°C et 260°C, en maintenant une pression comprise entre 10⁻² et 10⁻³ mmHg.

Cette étape de distillation moléculaire de l'huile d'avocat est de préférence réalisée en utilisant un dispositif choisi parmi les distillateurs moléculaires de type centrifuge et les dispositifs de type film raclé.

L'étape de traitement thermique de l'huile ou du concentrat, mise en œuvre à l'étape (g)i. ou (g)ii., est généralement réalisée à une température comprise entre 80°C et 150°C, par exemple entre 80°C et 130°C.

Le procédé de préparation de l'insaponifiable d'avocat comprend en outre une étape (h) de saponification et d'extraction de l'insaponifiable, par exemple à l'aide d'un solvant.

En particulier, l'étape (h) de saponification et d'extraction de l'insaponifiable peut être mise en œuvre en présence de potasse ou de soude en milieu alcoolique, de préférence éthanolique, suivie d'une ou plusieurs extraction(s). L'extraction par un solvant organique approprié (extraction liquide-liquide) en vue de séparer les savons d'acides gras et les composés insaponifiables, est particulièrement adaptée. Le solvant organique approprié peut être, par exemple choisi dans le groupe des alcanes, des alcanes halogénés, des solvants aromatiques et aromatiques halogénés, des éthers, des cétones, des esters, des solvants comprenant au moins un atome de silicium ou tout autre solvant approprié non miscible avec la solution hydro-alcoolique.

Suite à l'extraction de l'insaponifiable, on peut procéder à des étapes complémentaires (i) de purification ou de fractionnement.

Ledit insaponifiable contient au moins 45 %, plus avantageusement de 45% à 78%, en masse de lipides furaniques, par rapport à la masse totale de l'insaponifiable.

Avantageusement, l'insaponifiable contient en outre au moins 3%, plus avantageusement de 3 à 8%, en masse de stérols, par rapport à la masse totale de l'insaponifiable.

Avantageusement, l'insaponifiable contient en outre au moins 0,5%, plus avantageusement de 0.5 à 5%, en masse de squalène par rapport à la masse totale de l'insaponifiable.

Avantageusement, l'insaponifiable contient en outre de 0 à 5% en masse d'hydrocarbures aliphatiques saturés, par rapport à la masse totale de l'insaponifiable.

### Objet 3 - Procédé de préparation d'un tourteau riche en sucres et protéines

La présente invention a pour troisième objet, un procédé de préparation d'un tourteau d'avocat riche en sucres comprenant les étapes suivantes :
a) Sélectionner les avocats frais ayant une force de résistance à la pénétration dans la chair supérieure à 1 kg/cm², ladite force étant mesurée à l'aide d'un pénétromètre ;
b) Trancher en lamelles les avocats entiers sélectionnés ;
c) Sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80 °C à un débit supérieur ou égal à 150 m³/h ;
d) Eventuellement, concasser les avocats déshydratés obtenus à l'étape c) ;
e) Extraction de l'huile à partir des avocats déshydratés obtenus à l'étape c) ou d), de préférence par pressage mécanique ; et
f') Récupération du tourteau obtenu, de préférence après filtration de l'huile obtenue à l'étape e).

Dans le cadre de ce troisième objet de l'invention, les étapes a) à c) sont identiques à celles citées dans le cadre du procédé de préparation d'avocats déshydratés (premier objet). Ainsi, la partie concernant l'objet 1 de l'invention est intégralement reprise ici.

De même, les étapes d) et e) sont identiques à celles citées dans le cadre du procédé de préparation d'une huile d'avocat riche en insaponifiable (second objet de l'invention). Ainsi, les parties concernant les étapes d) et e) cités dans l'objet 2 de l'invention sont intégralement reprises ici.

Enfin, l'étape f') est avantageusement réalisée de manière similaire à l'étape f) citées dans le cadre du procédé de préparation d'une huile d'avocat riche en insaponifiable (second objet de l'invention), à l'exception du fait que c'est le tourteau et non l'huile qui est ensuite récupéré.

Avantageusement, ledit tourteau comprend au moins 5% de sucres, en particulier de 5% à 15% de sucres, plus particulièrement de 10 à 15%, exprimé en poids par rapport au poids total du tourteau.

Les sucres sont avantageusement choisis parmi les sucres en C7 tels que le Mannoheptulose et le Perséitol, et les sucres non spécifiques de l'avocat tels que le Fructose, le Saccharose et le Glucose
Avantageusement, le tourteau comprend au moins 5% de protéines, en particulier de 5% à 10%, plus particulièrement de 6% à 10%, exprimé en poids par rapport au poids total du tourteau.

Les protéines sont avantageusement choisies parmi les protéines de réserves et de structures présentes spécifiquement dans le fruit d'avocat entier
Les exemples qui suivent visent à illustrer la présente invention.

### EXEMPLES

### Exemples : analyse de l'influence des conditions opératoires sur le séchage par micro-ondes selon l'invention

### LE MATERIEL

- Trancheuse électrique Krups
- Broyeur Retsh GM200
- Presse KOMET
- Centrifugeuse Thermoscientific
- Filtre Büchner
- Pénétromètre Allcat FT 327
- Etuve Memmert
- Enceinte micro-ondes fermée à plateau tournant
- Enceinte micro-ondes fermée type Extractor 200
- Enceinte micro-ondes en continu à tapis
- Enceinte micro-ondes en continu à vis sans fin

### PROCEDURE EXPERIMENTALE

### a) Protocole de Séchage d'avocats frais par étuvage (contrôle) :

Les avocats frais et durs sont finement tranchés en lamelles de 1 à 2 mm puis répartis sur les 2 plateaux de l'étuve de façon à obtenir une couche de 2 cm d'épaisseur maximum (800 g d'avocats par plateau).

Ils sont séchés immédiatement en étuve à T=80 ± 5°C, jusqu'à obtenir des fruits secs extérieurement et à cœur, de couleur vert à marron clair.

Un contrôle de l'humidité résiduelle est réalisé par la technique de l'Infrarouge (réalisé sur produit finement broyé).

L'objectif étant d'obtenir un taux d'humidité résiduelle inférieur ou égal à 5%, le séchage est arrêté dès lors que l'humidité résiduelle des fruits répond à cet objectif. Les fruits doivent rester de couleur vert à marron clair.

### b) Protocole de séchage d'avocats frais par micro-ondes à l'échelle pilote :

Des avocats frais sont tranchés en lamelles de 1 à 2 mm avec l'aide d'une trancheuse électrique puis immédiatement séchés dans une étuve à micro-ondes fermée à plateau tournant munie d'un générateur de micro-ondes.

Dans le cadre de la démarche d'optimisation des conditions opératoires, les différents essais réalisés ont permis de tester l'impact des paramètres suivants :
- Puissance micro-ondes ;
- Température du flux d'air ;
- Durée de séchage
- Débit de l'air insufflé ;
- Etat de maturité des avocats ;
- Format des morceaux d'avocats ; et
- Température des avocats en sortie de séchage.

### c) Protocole d'extraction de l'huile :

Des avocats secs sont concassés puis pressés sur une presse à vis. L'huile brute est centrifugée, filtrée et soumise à analyse.

### d) Protocole d'analyse de l'huile :

L'huile est analysée par Chromatographie en Phase Gazeuse afin d'en déterminer le contenu en insaponifiable. L'analyse est effectuée selon le principe suivant : saponification d'une prise d'essai contenant du cholestanol et du squalane comme étalons internes, extraction de l'insaponifiable puis dosage des silyléthers de stérols, des Fractions "H", "IA" et du squalène par chromatographie en phase gazeuse sur colonne capillaire.

### e) Protocole d'extraction et d'analyse du tourteau :

Les sucres totaux sont extraits à l'eau déminéralisée. Après agitation et centrifugation, le surnageant est prélevé et analysé par HPLC afin de déterminer le profil en sucres de l'extrait total.

La teneur en protéines du tourteau est déterminée par la méthode Kjeldahl.

### Exemple 1 : Puissance micro-ondes

### a) LES AVOCATS

Des d'avocats frais, durs, d'origine Pérou, de variété Hass, ont été approvisionnés. Le calibre approximatif des fruits est de 200 g.

### b) PROCEDURE EXPERIMENTALE DÉTAILLÉE

### b1) Comparatif : Séchage d'avocats frais par étuvage (contrôle)

Les résultats de l'essai de contrôle sont mentionnés dans le Tableau 1 :

**Tableau 1 : Résultats de l'essai de Contrôle de l'Exemple 1**

| **Temps de séchage (h, min', sec")** | **Température de séchage (°C)** | **Humidité (% relatif)** | **% insaponifiable (dans l'huile)** | **% sucres (dans le tourteau)** |
|---|---|---|---|---|
| 8h | 80 | 2.5 | 13.0 | 10.8 |

### b2) Invention : Séchage d'avocats frais par micro-ondes à l'échelle laboratoire

Des avocats frais durs sont tranchés en lamelles de 1 à 2 mm puis immédiatement séchés dans une étuve à micro-ondes fermée à plateau tournant, munie d'un générateur de micro-ondes dont la puissance est réglée successivement de 600 à 5000 W. Le temps de séchage a été adapté selon la puissance choisie afin d'atteindre une humidité résiduelle inférieure ou égale à 5% sans endommager les fruits. La fréquence micro-ondes a été fixée à 2450 Hz et la température du flux d'air a été fixée à 20°C pour les 5 premiers essais et à 60°C pour les deux derniers essais.

Les différents essais réalisés ont permis de tester l'impact de la puissance :

### Résultats (Tableau 2) :

**Tableau 2 : Résultats des essais selon la puissance micro-ondes**

| **Puissance (W)** | **Durée de séchage (min)** | **Humidité (% relatif)** | **% insaponifiable (dans l'huile)** | **% sucres (dans le tourteau)** |
|---|---|---|---|---|
| 600 | 33 | 16.7 | ND | ND |
| 1200 | 15 | 9.0 | ND | ND |
| 3200 | 8 | 9.4 | 10.7 | 9.5 |
| 4800 | 5 | 5.6 | 19.0 | 10.6 |
| 5000 | 5 | flammes | ND | ND |
| 800 | 27.6 | 3.9 | 10.8 | 9.5 |
| 1000 | 21.6 | 3.5 | 11.3 | 10.4 |

### Conclusions

La performance du séchage est d'autant plus importante que la puissance des micro-ondes est forte. Cette puissance élevée permet un séchage rapide des avocats et de préserver le contenu en insaponifiable des avocats. Cependant, une puissance micro-ondes de 5000 W peut générer un séchage très rapide des fruits avec prise de feu. Il est donc nécessaire d'adapter le temps d'exposition des fruits en conséquence.

Ces essais ont été réalisé afin d'analyser l'influence de la puissance micro-ondes sur le séchage des avocats. Les 5 premiers essais ne sont néanmoins pas représentatifs de l'invention puisque le générateur d'air chaud assurant la ventilation de l'enceinte n'a pas été utilisé ici.

### Exemple 2 : Température du flux d'air

### a) LES AVOCATS

Des avocats frais, de dureté moyenne, d'origine Chili, variété Hass, ont été approvisionnés. Le calibre approximatif des fruits est de 200 g.

### b) PROCEDURE EXPERIMENTALE DÉTAILLÉE

### b1) Comparatif : Séchage d'avocats frais par étuvage (contrôle)

Les résultats de l'essai de Contrôle sont mentionnés dans le Tableau 3 :

**Tableau 3 : Résultats de l'essai Contrôle de l'exemple 2**

| **Temps de séchage (h, min', sec")** | **Température de séchage (°C)** | **Humidité (% relatif)** | **% insaponifiable (dans l'huile)** | **% sucre (dans le tourteau)** |
|---|---|---|---|---|
| 8h | 80 | 4.2 | 8.0 | 11.3 |

### b2) Invention : Séchage d'avocats frais par micro-ondes à l'échelle pilote :

Environ 550 g d'avocats frais de dureté moyenne (>1 et ≤3 kg/cm²) sont tranchés en lamelles de 1 à 2 mm avec l'aide d'une trancheuse électrique puis immédiatement séchés sur l'équipement Extractor 200 qui dispose d'un bol de 5 L et d'un générateur micro-ondes réglé sur une puissance de 1 000 W et une fréquence de 2450 Hz. Un générateur d'air chaud assure la ventilation de l'enceinte. La durée de séchage est en moyenne d'environ 22 minutes.

Les différents essais réalisés ont permis de tester l'impact de la température de l'air insufflé :

### Résultats (Tableau 4) :

**Tableau 4 : Résultats des essais selon la température du flux d'air**

| T° du flux d'air (°C) | Humidité (% relatif) | % insaponifiable (dans l'huile) | % sucres (dans le tourteau) |
|---|---|---|---|
| 40 | 11.0 | 10.6 | 10.2 |
| 60 | 4.7 | 10.7 | 13.2 |
| 80 | 2.9 | 9.1 | 6.9 |

### Conclusions

La présence d'un flux d'air chaud permet un séchage plus rapide et plus performant. A partir de 60°C, on atteint rapidement une humidité conforme en préservant les insaponifiables. En dessous de 60°C, le séchage est possible mais un temps d'exposition aux micro-ondes plus important est nécessaire. A 80°C, on observe une altération du contenu en sucres des tourteaux d'avocat (diminution de 38.9% des sucres par rapport à l'huile Témoin obtenue avec des avocats séchés en étuve).

### Exemple 3 : Durée du séchage

### a) LES AVOCATS

Des avocats frais, de dureté moyenne, d'origine Chili, variété Hass, ont été approvisionnés. Le calibre approximatif des fruits est de 200 g.

### b) PROCEDURE EXPERIMENTALE DÉTAILLÉE

### b1) Comparatif : Séchage d'avocats frais par étuvage (contrôle) :

Les résultats de l'essai de Contrôle sont mentionnés dans le Tableau 5 :

**Tableau 5 : Résultats de l'essai de Contrôle de l'exemple 3**

| **Temps de séchage (h, min', sec")** | **Température de séchage (°C)** | **Humidité (% relatif)** | **% insaponifiable (dans l'huile)** |
|---|---|---|---|
| 8h | 80 | 3.7 | 13.7 |

### b2) Invention : Séchage d'avocats frais par micro-ondes en mode continu :

Environ 300 g d'avocats frais de dureté moyenne sont tranchés en lamelles de 1 à 2 mm avec l'aide d'une trancheuse électrique puis immédiatement séchés dans une enceinte micro-ondes en continu à tapis munie d'un générateur de micro-ondes réglé sur une puissance de 3000 W et une fréquence de 2450 Hz. Un générateur d'air chaud à 80°C assure la ventilation de l'enceinte.

Les différents essais réalisés ont permis de tester l'impact de la durée du séchage.

### Résultats (Tableau 6) :

**Tableau 6 : Résultats des essais selon le temps de séchage**

| **Temps de séchage (h, min', sec")** | **Humidité (% relatif)** | **% insaponifiable (dans l'huile)** |
|---|---|---|
| 11'30" | 10.5 | 9.3 |
| 15' | 3.8 | 8.1 |
| 18'40" | 2.7 | 13.9 |

### Conclusions

La teneur en eau dans les avocats décroit au cours du temps d'exposition aux micro-ondes.

La durée de séchage doit permettre d'atteindre une humidité résiduelle ≤ 5% conformément à nos spécifications, ceci afin de préserver l'intégrité chimique des insaponifiables. Ainsi, le rendement de séchage pourra être défini comme étant la quantité d'avocats frais dont l'humidité résiduelle aura été réduite à moins de 5% en une minute.

### Exemple 4 : Débit de l'air insufflé

### a) LES AVOCATS

Des avocats frais, de dureté moyenne, d'origine Chili, variété Hass, ont été approvisionnés. Le calibre approximatif des fruits est de 200 g.

### b) PROCEDURE EXPERIMENTALE DÉTAILLÉE

### b1) Comparatif : Séchage d'avocats frais par étuvage (contrôle)

### Résultats de l'essai de Contrôle (Tableau 7) :

**Tableau 7 : Résultats de l'essai Contrôle de l'exemple 4**

| **Temps de séchage (h, min', sec")** | **Température de séchage (°C)** | **Humidité (% relatif)** | **% insaponifiable (dans l'huile)** |
|---|---|---|---|
| 8h | 80 | 3.7 | 13.7 |

### b2) Invention : Séchage d'avocats frais par micro-ondes en mode continu :

Environ 300 g d'avocats frais de dureté moyenne sont tranchés en lamelles de 1 à 2 mm avec l'aide d'une trancheuse électrique puis immédiatement séchés dans une enceinte micro-ondes en continu à tapis roulant munie d'un générateur de 3000 W et une fréquence de 2450 Hz. Un générateur d'air chaud à 80°C assure la ventilation de l'enceinte.

Les différents essais réalisés ont permis de tester l'impact du débit du flux d'air insufflé :

### Résultats (Tableau 8) :

**Tableau 8 : Résultats des essais selon le débit d'air**

| **Débit du flux d'air (m³/h)** | **Humidité (% relatif)** | **% insaponifiable (dans l'huile)** |
|---|---|---|
| 120 | 10.5 | 9.3 |
| 180 | 3.8 | 8.1 |
| 210 | 2.7 | 13.9 |

### Conclusions

Un débit d'air trop faible ne permet pas un séchage efficace des lamelles d'avocats. Le débit doit de préférence être assez puissant pour permettre une élimination en continue de la vapeur d'eau générée lors du séchage des fruits. Le contenu en insaponifiable est ainsi préservé. Le débit doit de préférence être d'au moins 50 m³/h, en particulier de 50 à 500 m³/h, plus particulièrement de 180 à 500 m³/h.

### Exemple 5 : Etat de maturité des avocats

### a) LES AVOCATS

Des avocats frais, d'origine Chili, variété Hass, ont été approvisionnés. Le calibre approximatif des fruits est de 200 g.

La fermeté des avocats est évaluée par mesure avec un pénétromètre. Il définit la force nécessaire (en Kg/cm²) pour faire pénétrer dans le fruit une aiguille de taille calibrée. Avant la mesure, le fruit est pelé pour se dispenser de la résistance de la peau (tégument). La tige, aussi appelée pointe ou buse utilisée pour cette mesure a un diamètre nominal de l'ordre de 8 mm. Les avocats durs utilisés avaient une résistance de pénétration dans la chair supérieure ou égale à 3 kg/cm². Les avocats mous utilisés avaient une résistance de pénétration inférieure ou égale à 1 kg/cm². Les avocats dits de dureté moyenne ont une résistance à la pénétration intermédiaire, située de 1 (non inclus) à 3 kg/cm².

### b) PROCEDURE EXPERIMENTALE DÉTAILLÉE

### b1) Comparatif : Séchage d'avocats frais par étuvage (contrôle)

### Résultats de l'essai Contrôle (Tableau 9) :

**Tableau 9 : Résultats de l'essai Contrôle de l'exemple 5**

| **Temps de séchage (h, min', sec")** | **Température de séchage (°C)** | **Humidité (% relatif)** | **% insaponifiable (dans l'huile)** | **% sucre (dans le tourteau)** |
|---|---|---|---|---|
| 8h | 80 | 4.2 | 8.0 | 11.3 |

### b2) Invention : Séchage d'avocats frais par micro-ondes à l'échelle pilote :

Environ 550 g d'avocats frais sont tranchés en lamelles de 1 à 2 mm avec l'aide d'une trancheuse électrique puis immédiatement séchés sur l'équipement Extractor 200 sous un flux d'air chaud à 60°C. La puissance micro-ondes est réglée entre 800 et 1150 W. La fréquence micro-ondes est réglée à 2450 Hz

Afin de disposer d'essais sur des fruits de maturité différentes, les essais sont réalisés deux fois mais à un jour d'intervalle, tout autre paramètre étant équivalent.

### Résultats (Tableau 10) :

**Tableau 10 : Résultats des essais selon le niveau de murissement des avocats**

| **Résistance des fruits (Kg/cm²)** | **Humidité (% relatif)** | **% insaponifiable (dans l'huile)** | **% sucres (dans le tourteau)** |
|---|---|---|---|
| Conditions N° 1 : 1000 W, 20 min séchage | | | |
| ≥ 3 | 4.7 | 10.7 | 13.2 |
| ≤ 1 | 3.8 | 9.3 | 9.7 |

| Conditions N° 2 : 800 W, 27 min de séchage | | | |
|---|---|---|---|
| ≥ 3 | 4.7 | 11.5 | 11.1 |
| ≤ 1 | 3.9 | 10.8 | 9.5 |

### Conclusions

Quelles que soient les conditions de séchage des avocats par micro-ondes, le contenu en insaponifiable de l'huile se trouve réduit lorsque la maturité des avocats mis en œuvre est avancée. La teneur en sucres des tourteaux se trouvent également diminuée.

### Exemple 6 : Format des morceaux d'avocats

### a) LES AVOCATS

Des avocats frais, durs, d'origine Chili, variété Hass, ont été approvisionnés. Le calibre approximatif des fruits est de 200g.

### b) PROCEDURE EXPERIMENTALE DÉTAILLÉE

### b1) Comparatif : Séchage d'avocats frais par étuvage (contrôle)

### Résultats de l'essai de contrôle (Tableau 11) :

**Tableau 11 : Résultats de l'essai Contrôle de l'exemple 6**

| **Temps de séchage (h, min', sec")** | **Température de séchage (°C)** | **Humidité (% relatif)** | **% insaponifiable (dans l'huile)** |
|---|---|---|---|
| 8h | 80 | 3.7 | 13.7 |

### b2) Invention : Séchage d'avocats frais par micro-ondes en mode continu :

Entre 300 et 600 g d'avocats frais sont tranchés en lamelles de 1 à 2 mm ou découpés en cubes de 1.5 cm de côté puis immédiatement séchés dans une étuve micro-ondes avec tapis roulant munie d'un générateur de micro-ondes. La puissance est réglée à 3000 W, la fréquence à 2450 Hz, et le flux d'air à 3000 L/min et à 85°C. Le temps de séchage est similaire pour les deux essais (18'40'').

Les différents essais réalisés ont permis de tester l'impact de la forme des morceaux d'avocats lors du séchage par micro-ondes :

### Résultats (Tableau 12) :

**Tableau 12 : Résultats des essais selon la découpe des avocats**

| **Format des avocats** | **Humidité (% relatif)** | **% Insaponifiable (dans l'huile)** |
|---|---|---|
| tranches | 2.7 | 13.9 |
| cubes | 10.1 | 10.5 |

### Conclusions

La découpe des avocats en cubes ne permet pas le séchage à cœur des fruits d'où un impact négatif sur la qualité du séchage et une altération du contenu en insaponifiable de l'huile obtenue.

### Exemple 7 : Format et parties des morceaux d'avocats

### a) LES AVOCATS

16 avocats Hass, verts durs, de variété Hass et d'origine Péruvienne, déclarés appartenir à un seul et même lot de fruits, sont fournis le matin même de leur mise en œuvre.

### b) PROCEDURE EXPERIMENTALE DÉTAILLÉE

Les avocats sont séchés à l'aide du four micro-ondes GFMO 01.

Pour chaque essai réalisé, 250 g de fruits sont répartis sur le plat du four à micro-ondes. Les essais sont doublés. Chaque condition opératoire requiert donc 500 g soit ≈ 2 avocats. Une puissance micro-ondes de 600 W est appliquée pendant 22 min pour chaque essai. L'enceinte micro-ondes est régulièrement ventilée afin d'évacuer l'eau évaporée, ceci afin de reproduire le flux d'air présent sur les essais pilotes.

Les contrôles réalisés sur les avocats secs pour évaluer la performance du séchage sont :
> La couleur des fruits : l'observation des fruits (aspect, couleur) permet d'évaluer l'efficacité du séchage et l'absence de dégradation de la matière. La couleur doit être verte à marron clair. Une couleur marron foncé à noir indique une carbonisation du fruit et donc une altération de l'intégrité chimique de la matière (et donc une dégradation des actifs recherchés).
➢ L'humidité résiduelle : mesurée par la technique de l'Infrarouge (réalisé sur le produit finement broyé), elle permet de s'assurer que le seuil de 5 % max est atteint (spécification Expanscience).

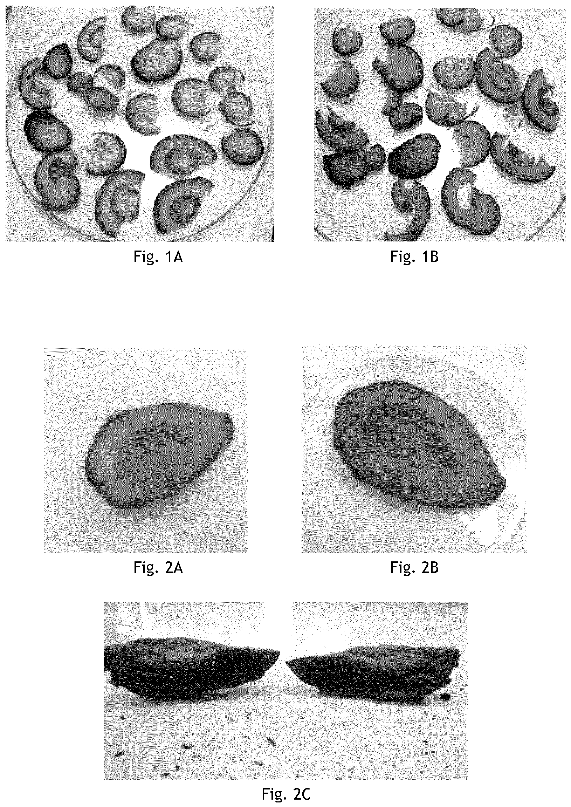

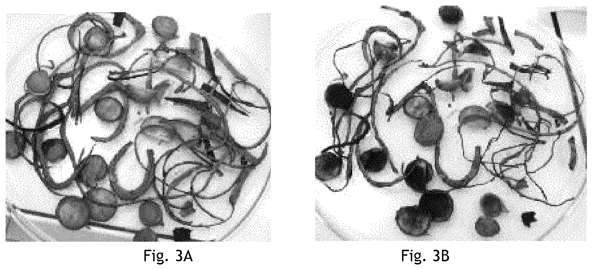

Trois essais de séchage sont ainsi réalisés :
1. 2 x 250 g d'avocat entier, avec peau + noyau, tranché en lamelles de 3 mm d'épaisseur. La Figure 1 représente les échantillons de l'essai 1 avant séchage (Figure 1A) et après séchage (Figure 1B).
2. 2 x 250 g d'avocat pétés et dénoyautés (sans peau ni noyau), tranché en 2. La Figure 2 représente l'aspect externe des échantillons de l'essai 2 avant séchage (Figure 2A) et après séchage (Figure 2B), et l'aspect à coeur des échantillons de l'essai 2 après séchage (Figure 2C).
3. 250 g de peau + noyau, tranchés en lamelles de 3 mm d'épaisseur. La Figure 3 représente les échantillons de l'essai 3 avant séchage (Figure 3A) et après séchage (Figure 3B).

### Résultats (Tableau 1213) :

**Tableau 13 : Résultats des essais selon la découpe des avocats**

| | *Essai 1* | *Essai 2* | *Essai 3* |
|---|---|---|---|
| *Puissance (W)* | *600* | *600* | *600* |
| *Temps (par avocat) (min)* | 12 | 12 | 12 |
| *Aspect* | *Correct, idéal et homogène* | *Brûlé à cœur, non homogène* | *Partiellement brûlé, non homogène* |
| *Masse de départ (g)* | *100* | *100* | *100* |
| *Masse après séchage (g)* | *27.4* | *33.7* | *27.1* |
| *Taux humidité (%)* | *2.27* | *4.9* | *0.86* |

### Conclusions

- Dans le cadre du séchage d'un avocat pelé, dénoyauté et coupé en 2 (essai 2), il n'est pas possible d'atteindre le niveau de séchage recherché sans en altérer la composition. On observe en effet une carbonisation de l'avocat à cœur mais pas de la surface. Le séchage se fait donc de façon hétérogène.
- Dans le cadre du séchage des peaux et noyaux tranchés, il n'est pas possible d'atteindre le niveau de séchage requis de la peau et du noyau de l'avocat sans en altérer la composition. On observe en effet une carbonisation partielle des noyaux. Le séchage se fait donc de façon hétérogène.

Ces essais montrent que les différentes parties de l'avocat réagissent différemment au séchage par micro-ondes dans des conditions équivalentes. Contrairement aux essais mettant en œuvre des parties d'avocat prises isolément (chair ou peau/noyau), la mise en œuvre d'un avocat entier tranché conduit à un séchage conforme, homogène et sans altération de la matière ; ceci malgré la présence des 3 parties différentes de l'avocat.

## Revendications

1. Procédé de préparation d'avocats déshydratés présentant une humidité résiduelle inférieure ou égale à 5%, ledit procédé comprenant les étapes suivantes :
a) sélectionner les avocats frais ayant une force de résistance à la pénétration dans la chair supérieure à 1 kg/cm², ladite force étant mesurée à l'aide d'un pénétromètre ;
b) trancher en lamelles les avocats entiers sélectionnés ; et
c) sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°Cà un débit supérieur ou égal à 150 m³/h.

2. Procédé selon la revendication 1, **caractérisé en ce que** lors de l'étape b), les avocats entiers sont tranchés en lamelle de 1 à 5 mm d'épaisseur, avantageusement de 1 à 3 mm d'épaisseur, en particulier de 2 mm d'épaisseur.

3. Procédé selon la revendication 1 ou 2, **caractérisé en ce que** lors de l'étape c), l'eau évaporée sous l'action des micro-ondes est éliminée grâce à un flux d'air chaud à température inférieure à 80°C, avantageusement à température comprise entre 40°C et 80°C, plus avantageusement à température comprise entre 40°C et 60°C.

4. Procédé selon l'une quelconque des revendications 1 à 3, **caractérisé en ce que** lors de l'étape c), le débit d'air chaud est entre 180 et 500 m³/h.

5. Procédé selon l'une quelconque des revendications 1 à 4, **caractérisé en ce que** lors de l'étape c), la puissance micro-onde est comprise entre 1000 et 5000 W, de préférence entre 2000 et 5000 W, en particulier entre 2500 et 5000 W.

6. Procédé de préparation d'une huile d'avocat riche en insaponifiable comprenant les étapes suivantes :
a) Sélectionner les avocats frais ayant une force de résistance à la pénétration dans la chair supérieure à 1 kg/cm², ladite force étant mesurée à l'aide d'un pénétromètre ;
b) Trancher en lamelles les avocats entiers sélectionnés ;
c) Sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°Cà un débit supérieur ou égal à 150 m³/h ;
d) Eventuellement, concasser les avocats déshydratés obtenus à l'étape c) ;
e) Extraction de l'huile à partir des avocats déshydratés obtenus à l'étape c) ou d), de préférence par pressage mécanique ; et
f) Récupération de l'huile obtenue, de préférence par filtration.

7. Procédé de préparation d'une fraction insaponifiable d'avocat comprenant les étapes suivantes :
- les étapes a) à f) telles que définies dans la revendication 6,
- une étape g), alternativement :
i. de traitement thermique de l'huile extraite à une température avantageusement comprise entre 80 et 150°C, puis concentration de l'huile en sa fraction insaponifiable, ou bien
ii. de concentration de l'huile en sa fraction insaponifiable, puis traitement thermique à une température avantageusement comprise entre 80 et 150°C,
- suivie d'une étape h) de saponification et d'extraction de l'insaponifiable,
- et éventuellement d'une étape i) d'au moins une purification et/ou un fractionnement.

8. Procédé de préparation d'un tourteau d'avocat riche en sucres comprenant les étapes suivantes :
a) Sélectionner les avocats frais ayant une force de résistance à la pénétration dans la chair supérieure à 1 kg/cm², ladite force étant mesurée à l'aide d'un pénétromètre ;
b) Trancher en lamelles les avocats entiers sélectionnés ;
c) Sécher les lamelles d'avocats obtenues à l'étape b) par micro-ondes jusqu'à obtention d'avocats déshydratés présentant une humidité résiduelle inférieure ou égale à 5%, lors de cette étape l'eau évaporée sous l'action des micro-ondes étant éliminée grâce à un flux d'air chaud de température inférieure ou égale à 80°C à un débit supérieur ou égal à 150 m³/h;
d) Eventuellement, concasser les avocats déshydratés obtenus à l'étape c) ;
e) Extraction de l'huile à partir des avocats déshydratés obtenus à l'étape c) ou d), de préférence par pressage mécanique ; et
f') Récupération du tourteau obtenu, de préférence par filtration de l'huile extraite à l'étape e).

9. Procédé selon l'une quelconque des revendications 6 à 8, **caractérisé en ce que** l'étape e) d'extraction de l'huile est effectuée par pressage mécanique à température comprise entre 80 et 100°C.

10. Procédé selon la revendication 6 ou 9, **caractérisé en ce que** l'huile d'avocat obtenu comprend une teneur en insaponifiable d'au moins 3%, plus avantageusement au moins 5%, en masse d'insaponifiable, par rapport à la masse totale de l'huile.

11. Procédé selon la revendication 8 ou 9, **caractérisé en ce que** le tourteau d'avocat obtenu comprend une teneur en sucres d'au moins 5% en poids, de préférence de 5% à 15% en poids, par rapport au poids total du tourteau obtenu.

12. Procédé selon la revendication 8, 9 ou 11, **caractérisé en ce que** le tourteau d'avocat obtenu comprend une teneur en protéines d'au moins 5%, en particulier de 5% à 10%, plus particulièrement de 6% à 10%, en poids par rapport au poids total du tourteau.

## Patentansprüche

1. Verfahren zur Herstellung von dehydrierten Avocados, die eine Restfeuchtigkeit von kleiner oder gleich 5 % aufweisen, wobei das Verfahren die folgenden Schritte umfasst:
a) Auswählen der frischen Avocados, die eine Widerstandskraft gegen Eindringen in das Fleisch von höher als 1 kg/cm² aufweisen, wobei die Kraft mittels eines Penetrometers gemessen wird;
b) Schneiden der ausgewählten ganzen Avocados in feine Scheiben; und
c) Trocknen der in Schritt b) erhaltenen feinen Avocadoscheiben durch Mikrowellen bis zum Erhalt von dehydrierten Avocados, die eine Restfeuchtigkeit von kleiner oder gleich 5 % aufweisen, wobei bei diesem Schritt das unter der Wirkung der Mikrowellen verdampfte Wasser mittels einer Warmluftströmung bei einer Temperatur von kleiner oder gleich 80°C bei einem Volumenstrom von größer oder gleich 150 m³/Std. beseitigt wird.

2. Verfahren nach Anspruch 1, **dadurch gekennzeichnet, dass** bei Schritt b) die ganzen Avocados in dünne Scheiben mit einer Dicke von 1 bis 5 mm, vorteilhafterweise einer Dicke von 1 bis 3 mm, insbesondere einer Dicke von 2 mm, geschnitten werden.

3. Verfahren nach Anspruch 1 oder 2, **dadurch gekennzeichnet, dass** beim Schritt c) das unter der Wirkung der Mikrowellen verdampfte Wasser mittels einer Warmluftströmung bei einer Temperatur von unter 80°C, vorteilhafterweise bei einer Temperatur von zwischen 40°C und 80°C, vorteilhafter bei einer Temperatur von zwischen 40°C und 60°C, beseitigt wird.

4. Verfahren nach einem der Ansprüche 1 bis 3, **dadurch gekennzeichnet, dass** beim Schritt c) der Warmluftvolumenstrom zwischen 180 und 500 m³/Std. beträgt.

5. Verfahren nach einem der Ansprüche 1 bis 4, **dadurch gekennzeichnet, dass** beim Schritt c) die Mikrowellenleistung zwischen 1000 und 5000 W, vorzugsweise zwischen 2000 und 5000 W, insbesondere zwischen 2500 und 5000 W, beträgt.

6. Verfahren zur Herstellung eines Avocadoöls, das reich an unverseifbaren Stoffen ist, das die folgenden Schritte umfasst:
a) Auswählen der frischen Avocados, die eine Widerstandskraft gegen Eindringen in das Fleisch von höher als 1 kg/cm² aufweisen, wobei die Kraft mittels eines Penetrometers gemessen wird;
b) Schneiden der ausgewählten ganzen Avocados in feine Scheiben;
c) Trocknen der in Schritt b) erhaltenen feinen Avocadoscheiben durch Mikrowellen bis zum Erhalt von dehydrierten Avocados, die eine Restfeuchtigkeit von kleiner oder gleich 5 % aufweisen, wobei bei diesem Schritt das unter der Wirkung der Mikrowellen verdampfte Wasser mittels einer Warmluftströmung bei einer Temperatur von kleiner oder gleich 80°C bei einem Volumenstrom von größer oder gleich 150 m³/Std. beseitigt wird;
d) gegebenenfalls Zerkleinern der in Schritt c) erhaltenen dehydrierten Avocados;
e) Extrahieren des Öls ausgehend von den in Schritt c) oder d) erhaltenen dehydrierten Avocados, vorzugsweise durch mechanisches Pressen; und
f) Rückgewinnen des erhaltenen Öls, vorzugsweise durch Filtrieren.

7. Verfahren zur Herstellung einer unverseifbaren Avocadofraktion, das die folgenden Schritte umfasst:
- die Schritte a) bis f) nach Anspruch 6,
- einen Schritt g), wahlweise:
i. des Wärmebehandelns des extrahierten Öls bei einer Temperatur, die vorteilhafterweise zwischen 80 und 150°C beträgt, dann des Konzentrierens des Öls in seiner unverseifbaren Fraktion, oder
ii. des Konzentrierens des Öls in seiner unverseifbaren Fraktion, dann des Wärmebehandelns bei einer Temperatur, die vorteilhafterweise zwischen 80 und 150°C beträgt,
- gefolgt von einem Schritt h) des Verseifens und des Extrahierens der unverseifbaren Stoffe,
- und gegebenenfalls einen Schritt i) des mindestens Reinigens und/oder Fraktionierens.

8. Verfahren zur Herstellung eines Avocado-Presskuchens, der reich an Zuckern ist, das die folgenden Schritte umfasst:
a) Auswählen der frischen Avocados, die eine Widerstandskraft gegen Eindringen in das Fleisch von höher als 1 kg/cm² aufweisen, wobei die Kraft mittels eines Penetrometers gemessen wird;
b) Schneiden der ausgewählten ganzen Avocados in feine Scheiben;
c) Trocknen der in Schritt b) erhaltenen feinen Avocadoscheiben durch Mikrowellen bis zum Erhalt von dehydrierten Avocados, die eine Restfeuchtigkeit von kleiner oder gleich 5 % aufweisen, wobei bei diesem Schritt das unter der Wirkung der Mikrowellen verdampfte Wasser mittels einer Warmluftströmung bei einer Temperatur von kleiner oder gleich 80°C bei einem Volumenstrom von größer oder gleich 150 m³/Std. beseitigt wird;
d) gegebenenfalls Zerkleinern der in Schritt c) erhaltenen dehydrierten Avocados;
e) Extrahieren des Öls ausgehend von den in Schritt c) oder d) erhaltenen dehydrierten Avocados, vorzugsweise durch mechanisches Pressen; und
f') Rückgewinnen des erhaltenen Presskuchens, vorzugsweise durch Filtrieren des in Schritt e) extrahierten Öls.

9. Verfahren nach einem der Ansprüche 6 bis 8, **dadurch gekennzeichnet, dass** der Schritt e) des Extrahierens des Öls durch mechanisches Pressen bei einer Temperatur von zwischen 80 und 100°C durchgeführt wird.

10. Verfahren nach Anspruch 6 oder 9, **dadurch gekennzeichnet, dass** das erhaltene Avocadoöl einen Gehalt an unverseifbaren Stoffen von mindestens 3 Masse-%, vorteilhafter mindestens 5 Masse-%, an unverseifbaren Stoffen, bezogen auf die Gesamtmasse des Öls, umfasst.

11. Verfahren nach Anspruch 8 oder 9, **dadurch gekennzeichnet, dass** der erhaltene Avocado-Presskuchen einen Gehalt an Zuckern von mindestens 5 Gewichts-%, vorzugsweise von 5 Gewichts-% bis 15 Gewichts-%, bezogen auf das Gesamtgewicht des erhaltenen Presskuchens, umfasst.

12. Verfahren nach Anspruch 8, 9 oder 11, **dadurch gekennzeichnet, dass** der erhaltene Avocado-Presskuchen einen Gehalt an Proteinen von mindestens 5 Gewichts-%, insbesondere von 5 Gewichts-% bis 10 Gewichts-%, genauer gesagt von 6 Gewichts-% bis 10 Gewichts-%, bezogen auf das Gesamtgewicht des Presskuchens, umfasst.

## Claims

1. A process for preparing dehydrated avocados having a residual moisture content of less than or equal to 5%, said process comprising the following steps:
a) selecting fresh avocados having a strength of penetration into the flesh greater than 1 kg/cm², said strength being measured using a penetrometer ;
b) slicing the selected whole avocados into strips; and
c) drying the avocado strips obtained in step b) using microwaves until dehydrated avocados with a residual moisture content of less than or equal to 5% are obtained, during this step the water evaporated by the action of the microwaves being removed by means of a flow of hot air at a temperature of less than or equal to 80°C at a flow rate of greater than or equal to 150 m³/h.

2. Process according to claim 1, **characterised in that** in step b), the whole avocados are sliced into strips 1 to 5 mm thick, advantageously 1 to 3 mm thick, in particular 2 mm thick.

3. Process according to claim 1 or 2, **characterized in that** during step c), the water evaporated under the action of microwaves is removed by means of a flow of hot air at a temperature of less than 80° C, advantageously at a temperature of between 40° C and 80°C, more advantageously at a temperature of between 40° C and 60° C.

4. Process according to any one of claims 1 to 3, **characterised in that** during step c), the hot air flow rate is between 180 and 500 m³/h.

5. Process according to any one of claims 1 to 4, **characterised in that** in step c), the microwave power is between 1000 and 5000 W, preferably between 2000 and 5000 W, in particular between 2500 and 5000 W.

6. A process for preparing an unsaponifiable-rich avocado oil comprising the following steps:
a) Selecting fresh avocados having a strength of penetration into the flesh greater than 1 kg/cm², said strength being measured using a penetrometer;
b) Slice the selected whole avocados into strips;
c) Drying the avocado strips obtained in step b) using microwaves until dehydrated avocados with a residual moisture content of less than or equal to 5% are obtained, during which step the water evaporated by the action of the microwaves is eliminated using a flow of hot air at a temperature of less than or equal to 80°C at a flow rate of greater than or equal to 150 m³/h ;
d) Optionally, crushing the dehydrated avocados obtained in step c);
e) Extraction of the oil from the dehydrated avocados obtained in step c) or d), preferably by mechanical pressing; and
f) Recovery of the oil obtained, preferably by filtration.

7. A process for preparing an unsaponifiable avocado fraction comprising the following steps:
- steps a) to f) as defined in claim 6,
- a step g), alternatively :
i. heat treatment of the extracted oil at a temperature advantageously between 80 and 150°C, followed by concentration of the oil into its unsaponifiable fraction, or else
ii. concentration of the oil into its unsaponifiable fraction, followed by heat treatment at a temperature advantageously between 80 and 150°C,
- followed by a step h) of saponification and extraction of the unsaponifiable matter,
- and optionally a step i) of at least one purification and/or fractionation operation.

8. A process for preparing a sugar-rich avocado cake comprising the following steps:
a) Selecting fresh avocados having a strength of penetration into the flesh greater than 1 kg/cm², said strength being measured using a penetrometer;
b) Slice the selected whole avocados into strips;
c) Drying the avocado strips obtained in step b) using microwaves until dehydrated avocados with a residual moisture content of less than or equal to 5% are obtained, during which step the water evaporated by the action of the microwaves is eliminated using a flow of hot air at a temperature of less than or equal to 80°C at a flow rate of greater than or equal to 150 m³/h;
d) Optionally, crushing the dehydrated avocados obtained in step c);
e) Extraction of the oil from the dehydrated avocados obtained in step c) or d), preferably by mechanical pressing; and
f') Recovery of the cake obtained, preferably by filtering the oil extracted in step e).

9. Process according to any one of claims 6 to 8, **characterised in that** step e) of extracting the oil is carried out by mechanical pressing at a temperature of between 80 and 100°C.

10. Process according to claim 6 or 9, **characterized in that** the avocado oil obtained comprises an unsaponifiable matter content of at least 3%, more advantageously at least 5%, by mass of unsaponifiable matter, relative to the total mass of the oil.

11. Process according to claim 8 or 9, **characterized in that** the avocado cake obtained comprises a sugar content of at least 5% by weight, preferably from 5% to 15% by weight, relative to the total weight of the cake obtained.

12. Process according to claim 8, 9 or 11, **characterized in that** the avocado cake obtained comprises a protein content of at least 5%, in particular from 5% to 10%, more particularly from 6% to 10%, by weight relative to the total weight of the cake.
